## Europäisches Patentamt

## European Patent Office

## Office européen des brevets

(11) Numéro de publication: **0 286 519 B1**

(12) **FASCICULE DE BREVET EUROPEEN**

(45) Date de publication du fascicule du brevet:
**12.12.90**

(51) Int. Cl.⁵: **B60J 5/04**

(21) Numéro de dépôt: **88400788.1**

(22) Date de dépôt: **31.03.88**

(54) Dispositif de fermeture à ouvrant articulé autour de deux axes.

(30) Priorité: **03.04.87 FR 8704735**

(43) Date de publication de la demande:
**12.10.88 Bulletin 88/41**

(45) Mention de la délivrance du brevet:
**12.12.90 Bulletin 90/50**

(84) Etats contractants désignés:
**BE DE IT LU NL**

(56) Documents cités:
**DE-A- 3 304 660**
**DE-U- 8 520 432**
**FR-A- 2 056 264**

(73) Titulaire: **MATRA AUTOMOBILE, 4 Rue de Presbourg,
F-75116 Paris(FR)**

(72) Inventeur: **Viard, Alain, ZI le Chêne Sorcier CD 161 -
BP 47, F-78340 Les Clayes sous Bois(FR)**

(74) Mandataire: **Fort, Jacques, CABINET
PLASSERAUD 84, rue d'Amsterdam, F-75009 Paris(FR)**

ACTORUM AG

## Description

L'invention concerne les dispositifs d'ouverture et de fermeture d'ouvrant déplaçable entre une position de pleine ouverture et une position de fermeture où il s'applique sur un dormant muni d'un encadrement destiné à le recevoir. Elle trouve une application particulièrement importante sur les véhicules automobiles, dont les dispositifs de fermeture comportent à l'heure actuelle un ouvrant, qui généralement tourne autour d'un seul axe, sensiblement vertical pour les portes de véhicules de tourisme, horizontal pour les hayons de véhicules dits à cinq portes et de breaks.

Il n'est possible d'amener l'ouvrant d'un tel dispositif jusqu'à sa position de pleine ouverture que si l'espace important nécessaire au basculement autour d'un axe est libre. Cette condition n'est souvent pas remplie dans un garage. Et la venue brutale d'une porte de voiture dans une position de saillie latérale importante, lorsque le conducteur veut descendre sur une voie de circulation, est source d'accrochages.

On connaît par ailleurs (DE-U-85 20432.3) un dispositif d'ouverture et de fermeture d'ouvrant conforme au préambule de la revendication 1. L'ouvrant est constitué par le capot du compartiment moteur d'une automobile. Le mouvement d'ouverture du capot est guidé, d'une part, par un bras monté par des axes terminaux sur la carrosserie et sur le capot, d'autre part, par coulissement d'un doigt fixé à la carrosserie dans une glissière fixée au capot. Un ressort d'ouverture à air repousse le capot dans sa position de pleine ouverture lorsque le capot est déverrouillé. Cette disposition vise à éviter une interférence entre le capot et d'autres éléments du véhicule lors de l'ouverture. Elle ne réduit en rien l'encombrement vertical du capot en position ouverte et le ressort d'ouverture joue uniquement son rôle naturel.

L'invention vise à réduire le volume libre nécessaire à l'ouverture et à la fermeture tout en permettant à l'ouvrant de venir dans une position où il dégage complètement l'encadrement du dormant.

Dans ce but l'invention propose un dispositif conforme à la partie caractérisante de la revendication 1.

Lorsque le dispositif équipe un véhicule de tourisme et constitue porte d'accès, le cadre du dormant pourra s'étendre sur la majeure partie d'un flanc et une fraction du pavillon de la carrosserie du véhicule pour donner accès aux places avant et arrière. L'ouvrant sera souvent constitué par une porte cintrée ayant une partie terminale haute qui est sensiblement horizontale lorsqu'elle est fermée donnant un accès plus facile à l'état ouvert. Les axes d'articulation sont horizontaux, le premier étant à l'extrémité de la porte et le second à proximité du cintrage.

Les moyens télescopiques à déploiement commandé seront fréquemment constitués par un ou des vérins à pression de fluide. Une solution particulièrement simple et avantageuse consiste à constituer ces vérins par des ressorts pneumatiques munis d'un clapet dont l'ouverture rend le ressort actif pour exercer une force de déploiement à partir d'une position rétractée. L'ouverture de ce clapet peut être commandé par une came disposée autour d'un des axes sur lesquels tournent les moyens télescopiques.

L'invention sera mieux comprise à la lecture de la description qui suit d'un mode particulier de réalisation, donné à titre d'exemple non limitatif et constituant porte d'accès à un véhicule. La description se réfère aux dessins qui l'accompagnent dans lesquels :

- la figure 1 montre schématiquement les positions successives prises par l'ouvrant du dispositif lors de son ouverture ;
- la figure 2 est une vue simplifiée du dispositif en coupe perpendiculaire aux axes d'articulation, montrant les moyens interposés entre l'ouvrant et le dormant ;
- la figure 3 montre un constitution possible de moyens d'ouverture et de fermeture du dispositif des figures 1 et 2 ;
- la figure 4 est une vue de détail en perspective avec parties arrachées montrant la façon dont les divers composants montrés en figure 2 peuvent s'intégrer dans la structure du véhicule.

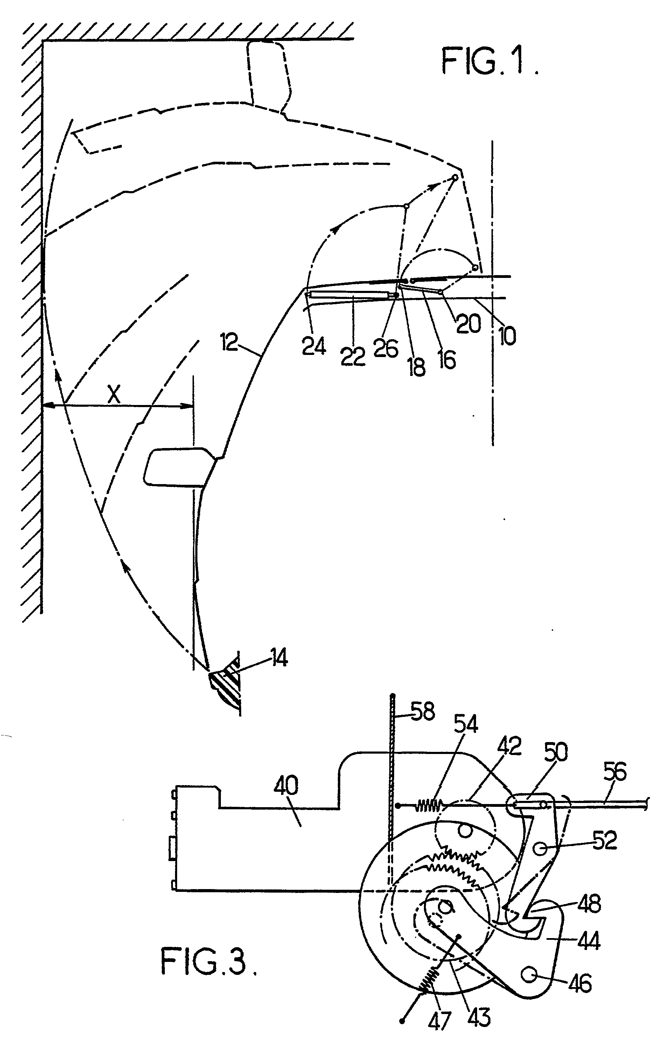

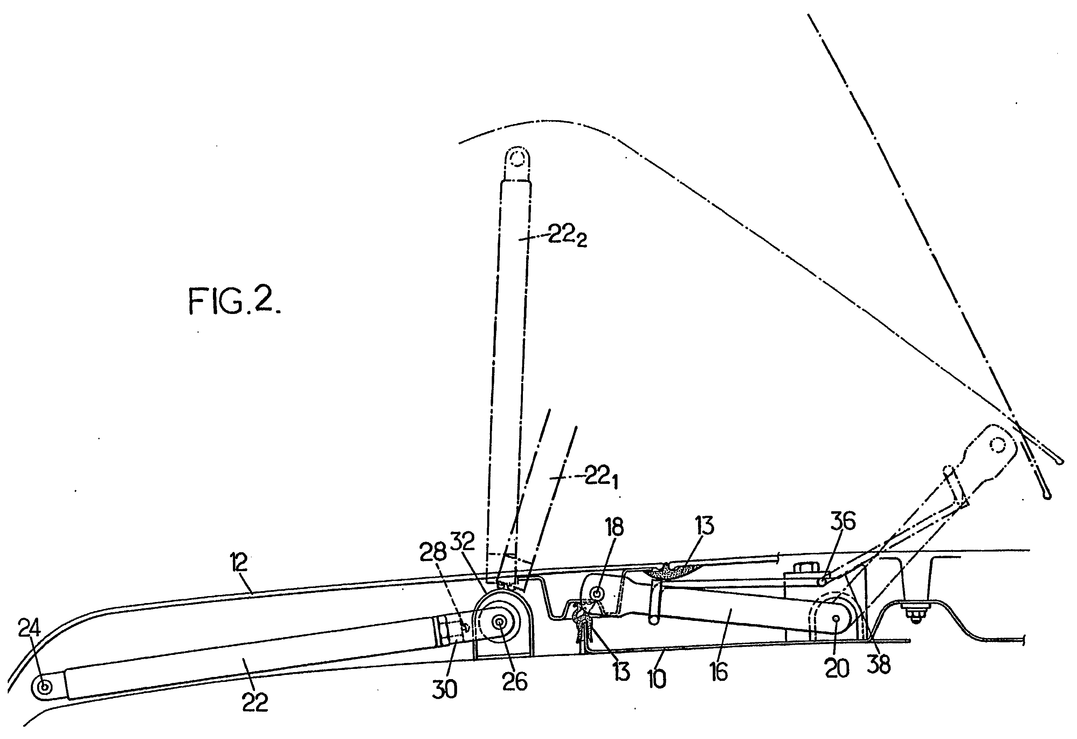

Les figures 1 et 2 montrent schématiquement une fraction de la structure 10 d'un véhicule équipé d'un ouvrant 12 constituant porte latérale d'accès. La partie supérieure de la structure et un bas de caisse 14 de forte section assurent la rigidité longitudinale. Un arceau avant, qui peut porter le pare-brise, et un arceau arrière présentent des parties à faible inclinaison sur la verticale constituant pieds de porte. Un ou des joints d'étanchéité 13 (figure 2) sur lesquels vient s'appliquer l'ouvrant 12 sont fixés aux pieds de porte, au bas de caisse et à la partie supérieure de la structure pour recevoir l'ouvrant en position de fermeture.

L'ouvrant 12 est relié à la structure 10 par une tringlerie d'articulation qui comprend :
- des moyens basculants de longueur fixe, constitués par un jeu de deux biellettes 16 articulées sur l'ouvrant 12 autour d'un axe d'articulation 18 placé à proximité de l'extrémité haute de l'ouvrant et sur la structure fixe 10 autour d'un axe 20 parallèle au premier ; ces deux biellettes peuvent constituer deux bras d'une structure en U dont la rigidité solidarise les biellettes et évite le gauchissement de l'ouvrant.
- des moyens télescopiques constitués par un jeu de deux ressorts à gaz 22 articulés sur l'ouvrant 12 autour d'un axe 24 parallèle aux axes 18 et 20, situé dans la zone cintrée de l'ouvrant, et sur la structure fixe 10 autour d'un axe 26.

Chaque biellette 16 et le ressort à gaz 22 placé du même côté de l'ouvrant constituent les deux côtés mobiles d'un quadrilatère déformable.

Le ressort à gaz 22 comporte un clapet normalement fermé et dont l'ouverture rend le ressort à gaz actif, c'est-à-dire l'amène à exercer une force tendant à allonger le ressort de l'état rétracté où il est monté en traits pleins sur la figure 2 à l'état déployé $22_1$ où il est montré en traits mixtes sur la figure 2. L'ouverture du clapet du ressort à gaz est commandée, par enfoncement d'un poussoir 28 qui fait saillie vers l'axe d'articulation 26, entre les bras de la chape 30 de fixation du piston. La patte 32, qui définit l'axe 26, constitue une came fixe destinée à ouvrir le clapet et à provoquer le déploiement automatique du ressort à gaz 22 lorsque, dans son mouvement d'ouverture, l'ouvrant 12 arrive dans une position déterminée, correspondant à la position $22_2$ du ressort. Une ou des butées 38 portées par la structure 10 définissent la position prise par les biellettes 16 pour la pleine ouverture de l'ouvrant 12.

Comme le montre la figure 1, l'ouvrant en position haute ne dépasse pas le plan de symétrie du véhicule mais dégage cependant complètement l'accès.

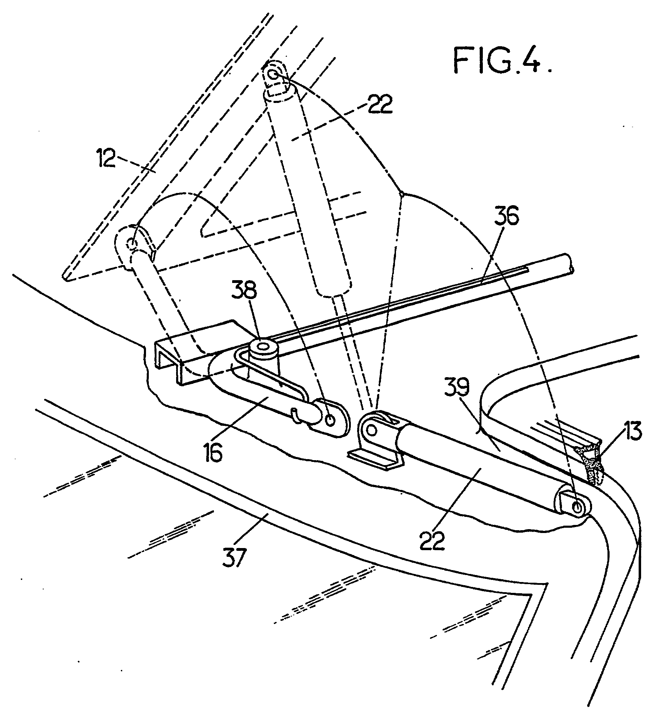

Dans le mode particulier de réalisation montré en figure 2, le dispositif est prévu pour que l'effort d'ouverture de l'ouvrant soit fourni par des moyens de stockage d'énergie. La fermeture peut être commandée manuellement par l'intermédiaire d'une sangle fixée à l'ouvrant ou -pour augmenter le confort d'utilisation-être commandée par un moteur (figure 3). Pour cela, la structure fixe porte une ou des barres de torsion 36 dont les parties coudées terminales viennent s'engager sous les biellettes 16 et tendent à les amener de la position montrée en traits pleins à la position montrée en traits mixtes sur la figure 2.

Le dispositif comportera généralement deux tringleries ayant la constitution montrée en figures 1, 2 et 4, placées chacune d'un côté de la porte. Ces tringleries sont masquées, lorsque le dispositif est fermé, par des parties latérales de l'ouvrant. L'espace nécessaire au logement des biellettes 16, des ressorts à gaz 22 et des barres de torsion 36 peut être ménagé dans une gouttière de la structure se prolongeant le long de l'encadrement du pare-brise 37. La figure 4 montre, en traits pleins, les biellettes 16 et les ressorts à gaz 22 effacés dans la gouttière 39 lorsque l'ouvrant est fermé, en traits mixtes, la position qu'ils prennent lorsque l'ouvrant 12 est dans sa position de butée. Chaque palier de maintien de biellette et de barre de torsion constitue également butée 38 de fin de course.

Le mécanisme de fermeture motorisée et asservie de l'ouvrant peut avoir la constitution montrée en figure 3. Ce mécanisme comprend un moteur électrique 40 porté par la structure fixe et muni d'un pignon de sortie 42. Une couronne 43 est portée par un des bras d'un levier coudé 44 qui tourne sur la structure fixe autour d'un axe 46. Un ressort 47 exerce sur le levier 44 une force qui tend à écarter la couronne 43 du pignon 42 et à l'amener de la position indiquée en traits pleins à celle indiquée en traits mixtes. Le second bras du levier 44 porte un crochet 48 prévu pour s'encliqueter sur un crochet complémentaire prévu sur un levier de commande 50. Le levier de commande 50 tourne sur un axe fixe 52 et un ressort 54 tend à l'amener dans une position, indiquée en traits pleins, où il retient le levier 44. Une tringle de commande 56, reliée par exemple à une palette d'ouverture placée sur le bas de caisse à l'intérieur de la carrosserie ainsi qu'à l'extérieur, permet d'amener le levier 50 dans la position montrée en traits mixtes sur la figure 3 et de libérer le levier coudé 44. Un interrupteur (non représenté) permet la mise en marche du moteur 40 dont l'arrêt est commandé par une butée de fin de course basse équipant le dispositif.

La couronne 43 est solidaire d'une poulie d'enroulement d'une sangle 58 dont la longueur est prévue pour que, en fin de course d'ouverture de l'ouvrant, cette sangle se tende et ramène la couronne 43 et le crochet 44 dans la position d'engrènement de la couronne sur le pignon 42 (montré en traits pleins sur la figure 3).

Le fonctionnement du dispositif qui vient d'être décrit est le suivant.

Lorsqu'on tire sur la tringle 56, le levier 50 vient dans la position montrée en traits mixtes. Le crochet 48 est libéré. La couronne 43 se désolidarise du pignon moteur 42 et devient folle. La barre de torsion 36 exerce sur les biellettes 16 un moment qui soulève la porte, pendant que la sangle 58 se déroule. Lorsque le ressort à gaz 22 arrive dans la position $22_2$ (figure 2), lorsque les biellettes 16 viennent en appui contre les butées 38, la came 32 ouvre le clapet du ressort à gaz. Celui-ci se détend jusqu'à la position $22_1$.

Au cours de ce mouvement, l'ouvrant suit la trajectoire indiquée sur la figure 1 : on voit que pour une porte de voiture de dimensions courantes, il suffit d'une distance latérale libre $X = 30$ cm et d'une hauteur libre également faible pour dégager complètement l'accès.

Lorsque l'ouvrant arrive en fin de course, il tend la sangle 58 fixée à la couronne 43, que ramène celle-ci en prise sur le pignon 42 et ré-engage le crochet 48 sur le levier 50.

Lorsqu'on commande l'interrupteur de fermeture, le moteur 40 entraîne le pignon 42 et tire vers le bas l'ouvrant en provoquant successivement la rétraction du ressort à gaz 22, puis la rotation en bloc de la porte par déformation du parallèlogramme jusqu'à fermeture complète. Une butée de fin de course basse arrête le moteur lorsque la fermeture est assurée. Au cours du mouvement de descente, la rotation des biellettes 16 bande la barre de torsion 36 pour provoquer l'accumulation d'énergie nécessaire à l'ouverture ultérieure.

## Revendications

1. Dispositif d'ouverture et de fermeture comportant un dormant muni d'un cadre de réception d'un ouvrant (12) qui est articulé:
   – autour d'un premier axe d'articulation (18) sur des moyens de longueur fixe (16) qui tournent eux-mêmes sur le dormant autour d'un axe fixe (20) parallèle au premier axe d'articulation, et
   – autour d'un second axe d'articulation (24), parallèle au premier axe, sur des moyens téléscopiques (22) qui tournent eux-mêmes sur le dormant autour d'un autre axe fixe (26) parallèle au premier axe fixe, caractérisé en ce que les moyens de longueur fixe (16) et les moyens téléscopiques (22) tournent tous deux dans le même sens lors des mouvements d'ouverture et de fermeture de l'ouvrant et constituent ainsi un quadrilatère déformable, et en ce que les moyens téléscopiques (22) sont à déploiement commandé lors de l'ouverture, en un point déterminé de la trajectoire d'ouverture de l'ouvrant, de façon à dégager complétement l'accès au cadre.

2. Dispositif selon la revendication 1, caractérisé en ce que l'ouvrant présente une forme cintrée, en ce que les moyens de longueur fixe sont constitués par des biellettes (16) articulées à proximité de l'extrémité haute de l'ouvrant et en ce que les moyens téléscopiques sont constitués par des ressorts à gaz (22), articulés sur l'ouvrant à proximité de la partie cintrée.

3. Dispositif selon la revendication 1, ou 2, constituant porte de véhicule automobile, caractérisé en ce que le dormant appartient à une structure fixe du véhicule comportant des gouttières (39) destinées à recevoir lesdits moyens en position de fermeture et en ce que l'ouvrant comprend un rebord destiné à recouvrir lesdits moyens.

4. Disposition selon la revendication 3, caractérisé en ce que le cadre du dormant s'étend sur la majeure partie d'un flanc et une fraction du pavillon de la carrosserie du véhicule et en ce que l'ouvrant est constitué par une porte cintrée.

5. Dispositif selon la revendication 3 ou l'ensemble des revendications 3 et 4, caractérisé en ce que le ressort à gaz comprend un clapet dont l'ouverture le rend actif et en ce que ledit ressort est articulé sur le dormant autour dudit autre axe fixe (26) par l'intermédiaire de moyens constituant une came d'ouverture du clapet audit point déterminé.

6. Dispositif selon l'une quelconque des revendications précédentes, caractérisé en ce que l'ouvrant est sollicité dans le sens de l'ouverture par des moyens élastiques tels qu'une barre de torsion (36) portée par la structure fixe et présentant des bras en appui sur lesdits moyens de longueur fixe.

7. Dispositif selon l'une quelconque des revendications précédentes, caractérisé en ce qu'il comprend un mécanisme de fermeture comportant un moteur électrique (40) porté par la structure fixe et entraînant un pignon (42), une couronne déplaçable entre une position d'engrènement avec le pignon et une position où elle est libre par rapport au pignon, un tambour d'enroulement d'une sangle de traction (58) fixé à l'ouvrant et des moyens à commande manuelle (44, 50, 56) permettant d'amener la couronne (43) de sa position d'engrènement avec le pignon (42) à la position où elle est libre, ladite sangle étant prévue pour ramener la couronne en prise sur le pignon en fin de course d'ouverture du dispositif.

## Claims

1. An opening and closing device comprising a stationary body having a frame for receiving a closure member (12) which is pivotally connected:
– about a first pivotal axis (18) on means having a fixed length (16), said means being pivotally connected on the stationary body about a fixed axis (20) which is parallel to the first pivotal axis, and
– about a second pivotal axis (24) which is parallel to the first axis, on telescopic means (22) which are rotatably connected on the stationary body about another fixed axis (26) which is parallel to the first fixed axis,

characterized in that the means having a fixed length (16) and telescopic means (22) rotate in mutually identical directions during opening and closing movements of the closure member and constitute a deformable quadrilateral, and in that the telescopic means (22) are of a type whose expansion is controlled during opening, at a predetermined point of the opening path of the closure member, whereby the frame may be completely cleared.

2. Device according to claim 1, characterized in that the closure member has a curved shape, in that the means having a fixed length consist of links (16) pivoted in the vicinity of the higher end of the closure member and in that the telescopic means consist of gas pressure springs (22) pivotally connected to the closure member in the vicinity of the curved portion.

3. Device according to claim 1 or 2, constituting an access door for an automotive vehicle, characterized in that the stationary body belongs to a fixed structure of the vehicle having gutters (39) for receiving said means when in closed condition, and in that the closure member comprises a flange for covering said means.

4. Device according to claim 3, characterzed in that the frame of the stationary body extends over a major part of a side and a fraction of the roof of the body of the vehicle and in that the closure member consists of a curved door.

5. Device according to claim 3 or the combination of claims 3 and 4, characterized in that the gas pressure spring has a valve whose opening energizes the gas spring and in that said spring is pivotally connected on the stationary body about said other fixed axis (26) through means which constitute a cam for opening said valve at said predetermined point.

6. Device according to any one of the preceding claims, characterized in that the closure member is biased toward opening by resilient means such as a torsion bar (36) carried by the stationary body and having arms in abutment against said means of fixed length.

7. Device according to any one of the preceding claims, characterized in that it comprises a closing mechanism having an electric motor (40) carried by the stationary body and driving a pinion (42), a ring gear which is displaceable between a position where it meshes with said pinion and a position where it is free with respect to the pinion, a drum for winding a traction strap (58) connected to the closure member, and manually controlled means (44, 50, 56) for moving said ring gear (43) from the position where it meshes with the pinion (42) to the position where it is free, said strap being arranged for bringing back said ring gear into meshing engagement with the pinion at the end of the opening movement of the device.

## Patentansprüche

1. Öffnungs- und Schließvorrichtung mit einer Zarge, die mit einem Rahmen zur Aufnahme eines Flügels (12) versehen ist, der um eine erste Gelenkachse (18) auf Mitteln (16) einer vorgegebenen Länge, die sich selbst auf der Zarge um eine starre Achse (20) drehen, die parallel zu der ersten Gelenkachse verläuft, und um eine zweite Gelenkachse (24), die zur ersten Achse parallel verläuft, auf Teleskopmitteln (22), die sich selbst auf der Zarge um eine andere starre Achse (26), parallel zur ersten starren Achse, drehen, gelenkig angebracht ist, dadurch gekennzeichnet, daß die Mittel (16) mit vorgegebener Länge und die Teleskopmittel (22) sich beide im gleichen Sinn während der Öffnungs- und der Schließbewegung des Flügels drehen und so ein deformierbares Viereck bilden, und daß die Teleskopmittel (22) während des Öffnens an einem bestimmten Punkt der Öffnungskurve des Flügels in der Weise betätigt werden, daß der Zugang zum Rahmen völlig freigelegt wird.

2. Vorrichtung nach Anspruch 1, dadurch gekennzeichnet, daß der Flügel eine gewölbte Form aufweist, daß die Mittel der vorgegebenen Länge aus Spurstangen (16) bestehen, die in der Nähe des oberen äußeren Endes des Flügels gelenkig angebracht sind, und daß die Teleskopmittel aus Gasfedern (22) bestehen, die am Flügel in der Nähe des gewölbten Bereiches gelenkig angebracht sind.

3. Vorrichtung nach Anspruch 1 oder 2, eine Tür eines Automobiles darstellend, dadurch gekennzeichnet, daß die Zarge zu einer festen Struktur des Automobils gehört, mit Rinnen (39), die dazu bestimmt sind, die besagten Mittel in der Schließposition aufzunehmen, und daß der Flügel mit einem überstehenden Rand versehen ist, der dazu bestimmt ist, die besagten Mittel abzudecken.

4. Vorrichtung nach Anspruch 3, dadurch gekennzeichnet, daß der Rahmen der Zarge sich über die Hauptpartie der Flanke und einen Durchbruch des Autodaches der Karrosserie des Fahrzeuges erstreckt und daß der Flügel aus einer gewölbten Tür besteht.

5. Vorrichtung nach Anspruch 3 oder einem der vorangehenden Ansprüche 3 und 4, dadurch gekennzeichnet, daß die Gasfeder aus einer Klappe besteht, deren Öffnung sich aktiv zurückbewegt, und daß die besagte Feder an der Zarge um die besagte andere Achse (26) über Zwischenglieder der Mittel, die aus einem Öffnungsnocken der Klappe an dem besagten, bestimmten Punkt bestehen, gelenkig angebracht ist.

6. Vorrichtung nach einem der vorangehenden Ansprüche, dadurch gekennzeichnet, daß der Flügel in der Richtung der Öffnung durch die elastischen Mittel, beispielsweise einen Torsionsstab (36), der durch die feste Struktur getragen wird, gedrückt wird, die Arme durch die Stützung der besagten Mittel der festen Länge darstellen.

7. Vorrichtung nach einem der vorangehenden Ansprüche, dadurch gekennzeichnet, daß sie einen Schließmechanismus mit einem elektrischen Motor (40), der von der festen Struktur getragen wird und der ein Ritzel (42) antreibt, mit einem Zahnkranz, der sich zwischen einer Eingreifposition mit dem Ritzel und einer Position bewegt, wo er bezogen auf das Ritzel frei ist, und mit einer Trommel zum Aufwickeln eines Übersetzungsriemens (58), die am Flügel befestigt ist und Mittel zur Handführung (44, 50, 56) aufweist, die es erlauben, den Zahnkranz (43) von seiner Position, wo er mit dem Ritzel (42) in Eingriff steht, in eine Position, wo er frei ist, zu führen, wobei der besagte Übersetzungsriemen zum Zurückbringen des Zahnkranzes in Eingriff mit dem Ritzel am Ende des Öffnungsprozesses der Vorrichtung vorgesehen ist.

EP 0 286 519 B1

FIG.1.

FIG.3.

FIG.2.

FIG.4.